# FASCICULE DE BREVET EUROPEEN

(11) **EP 2 718 512 B1**
(45) Date de publication et mention de la délivrance du brevet: **13.03.2019**
(21) Numéro de dépôt: 12731541.4
(22) Date de dépôt: 07.06.2012
(51) Int. Cl.: E04B 2/74, F21V 33/00, G02B 6/00

(54) **CLOISON ÉCLAIRANTE EN VERRE**
LEUCHTENDE GLASSTRENNWAND
LIGHTING GLASS APRTITION

(30) Priorité: 09.06.2011 FR 1155075
(43) Date de publication de la demande: 16.04.2014
(73) Titulaire: Saint-Gobain Glass France, 92400 Courbevoie (FR)
(72) Inventeur: GIERENS, Anne, F-60200 Compiegne (FR); MONTGERMONT, Aude, F-75019 Paris (FR); ZHANG, Jingwei, F-91300 Massy (FR)
(74) Mandataire: Saint-Gobain Recherche
(86) Numéro de dépôt international: PCT/FR2012/051279
(87) Numéro de publication internationale: WO 2012/168660

(56) Documents cités:
- EP-A2- 2 317 355
- DE-B3-102004 005 873
- JP-A- 2007 220 352
- US-A- 5 786 665
- US-A1- 2011 110 115

## Description

L'invention concerne une cloison en verre éclairante comportant d'une part au moins un module verrier qui comprend au moins une feuille de verre, et d'autre part un système d'éclairage associé au module verrier.
Les cloisons éclairantes usuelles comportent leur système d'éclairage situé à l'intérieur de la cloison derrière les faces principales des feuilles de verre.

Une cloison éclairante en verre est connue du document DE 10 2004 005 873 B3 et divulgue le préambule de la revendication 1.

L'invention a pour but de proposer une nouvelle génération de cloison éclairante en verre robuste, écologique avec une installation simple et rapide.
Dans la suite de la description, les termes « horizontal », « vertical », « supérieur », « inférieur », « haut », « bas », s'entendent en qualifiant des éléments utilisés dans le cadre d'une installation normale de la cloison, c'est-à-dire relative à une notion verticale par rapport à un sol (plat) horizontal sur lequel serait posée (voire fixée) ladite cloison.

Selon l'invention, la cloison en verre éclairante, notamment destinée à être associée (montée) entre une surface d'accueil inférieure (sol ou autre surface inférieure) et une surface d'accueil supérieure (plafond ou autre) et à tout le moins associée (posée voire fixée) à une surface inférieure, comporte d'une part au moins un module verrier présentant deux faces principales et une tranche, le module comprenant au moins une feuille de verre, et d'autre part un système d'éclairage, et
- le système d'éclairage comprend des diodes électroluminescentes dont la face émettrice de lumière est disposée en regard de la tranche d'au moins un côté du module (et est espacée de la tranche du module), le module verrier (notamment la feuille de verre) formant guide de la lumière émise par les diodes et le module comprenant des moyens d'extraction de la lumière ainsi guidée, pour un éclairage via au moins l'une des faces principales,
- les diodes sont agencées sur au moins un dispositif de support et d'alimentation électrique dit support PCB,
- la cloison comporte au moins un profilé d'accueil des diodes qui est pourvu d'une base longitudinale, en regard de la tranche du module et porteuse du support PCB, et
- le profilé d'accueil des diodes comporte une pièce apte à maintenir un écartement entre la face émettrice des diodes et la tranche du module, la pièce formant au moins une butée d'appui de la tranche du module
- la cloison étant transparente hors moyens d'extraction de la lumière et tel que le système d'éclairage est agencé au niveau du côté horizontal inférieur du module en position montée de la cloison et ladite pièce comprend en regard de la tranche du module une surface pleine, formant la butée d'appui de la tranche du module et de support de la tranche, surface opposée à la base dans des zones hors diodes, la surface pleine s'étendant longitudinalement dans la zone des diodes en étant trouée au droit des diodes.

Selon une caractéristique, la surface pleine est opposée à la base dans des zones hors diodes et hors support(s) PCB.

On entend par « des zones hors diodes » pour l'étendue de la surface pleine, des zones qui ne sont pas nécessairement toutes les zones hors diodes. En effet, dans certaines zones hors diodes, la surface ne sera pas strictement pleine car pouvant par exemple présenter des trous pour des moyens de fixation.

On entend par surface pleine, une surface par opposition à une surface trouée, et en particulier trouée de manière continue selon un axe longitudinal.

Les diodes ne risquent pas de toucher le module. Elles sont protégées. Elles ne font pas saillie en dehors de la surface du profilé la plus proche du module.

La pièce forme une butée (d'appui) lors du montage dans la cloison en partie inférieure comme en partie supérieure et en outre une butée de support (vis-à-vis du poids du vitrage) pour la partie inférieure.

La surface pleine est avantageusement trouée au droit des diodes. La surface pleine est formée par au moins une paroi en L qui est en saillie de la base et s'étend dans des zones en dehors des diodes, de préférence selon un retour parallèle et de largeur égale à la base, ou bien est formée par deux parois en saillie qui sont réunies entre elles dans les zones en dehors des diodes selon une section fermée rectangulaire.
La surface pleine est notamment en regard de la base du profilé, le long de l'axe longitudinal d'extension des diodes.

Le profilé avec cette surface pleine (notamment au centre du vitrage) est bien plus avantageux qu'un profilé qui serait fait d'une pièce en deux parties latérales en saillie ou séparées de part et d'autre des diodes, ou même à un profilé d'une pièce d'un seul tenant de largeur égale à la tranche du vitrage et pourvue d'une fente ou d'une ouverture longitudinale en regard de la tranche du vitrage, cette ouverture étant présente dans la zone des diodes et en dehors des zones de diodes notammentsi plusieurs PCB sont utilisés..

En position montée de la cloison et en partie supérieure, la pièce d'écartement, qui n'a néanmoins pas besoin de constituer une butée de support au regard du poids du vitrage, peut comprendre tout comme pour la partie inférieure, une surface pleine en regard de la tranche du module, surface opposée à la base, dans des zones hors diodes, voire hors support(s) PCB, la surface pleine s'étendant longitudinalement dans la zone des diodes en étant trouée au droit des diodes.

La pièce comporte au moins une première paroi latérale aux diodes reliée à la base du profilé d'accueil, ou deux parois latérales reliées à la base du profilé d'accueil. La première paroi latérale est de préférence au moins en partie en regard de la tranche du module et disposée en saillie de la face émettrice des diodes, autrement dite paroi latérale saillante ci-après.

On entend par « reliée » dans l'expression « une première paroi latérale, notamment rapportée voire reliée à la base », une solidarisation de la paroi à la base (la base étant par exemple plane de section transversale rectangulaire, creuse ou pleine) lors de la fabrication de l'ensemble, la paroi et la base ne formant qu'un seul ensemble unitaire voire même une pièce d'un seul tenant, la paroi étant intégrée à la base. Par exemple la pièce présente dans son ensemble (base et paroi) une section transversale en L, par exemple dans les zones de diodes et cette section en L étant de préférence combinée avec une surface pleine ou avec un retour en dehors des zones de diodes. En variante, la pièce présente dans son ensemble (base et parois) une section en forme de U dans les zones de diodes, le U étant réuni par une surface pleine à l'opposé de la base dans les zones en dehors des diodes.

Dans le reste de la description, la première paroi latérale, et lorsqu'il y a une deuxième paroi latérale, les deux parois latérales font partie du profilé ou font partie d'une pièce distincte du profilé. De manière préférée, la pièce d'écartement est constituée du profilé support des diodes.

De préférence la paroi latérale est orthogonale à la tranche (plane, parallèle à la surface de montage), est en outre orthogonale au support PCB et/ou à l'âme d'un profilé de montage de la cloison.

Un tel éclairage à base de diodes électroluminescentes (DEL ou LED en anglais) associé à du verre est à une basse consommation énergétique et robuste dans le temps.

Grâce à la paroi latérale saillante, les faces des diodes sont protégées des chocs lors du montage en regard de la tranche du module de manière à disposer les diodes en vis-à-vis de cette tranche.

De plus, en particulier le long du côté inférieur du module en position montée de la cloison, le poids du module n'est pas une gêne et ne risque pas de détériorer les diodes car le module ne peut pas toucher les diodes.

En outre, le profilé d'accueil des diodes permet d'installer rapidement le système d'éclairage dans la cloison et fournit un système simple de fabrication. Les diodes sont en effet indépendantes des modules verriers. Les modules utilisés sont des vitrages usuels sans qu'ils ne soient besoin de pratiquer des trous dans la tranche du module verrier pour y disposer les diodes.

Avantageusement, les diodes sont du type « top emitting » en anglais et non « side emitting », c'est-à-dire qu'elles éclairent dans la direction opposée à leur dispositif de support et non latéralement. La face émettrice des diodes est parallèle à la tranche du module et de préférence à la surface de montage (plane).

Pour réduire l'encombrement et/ou se loger dans le profilé de montage de la cloison de largeur donnée éventuellement réduite, la ou les parois latérales saillantes de préférence réunies par une surface pleine ne dépassent pas (latéralement) de la tranche du module ou dépassent de préférence d'au plus 1 cm voire 5 mm (sur un ou sur les deux cotés du module).

De préférence le ou les supports PCB avec les diodes sont démontables de la cloison par exemple ne sont pas fixés de manière permanente à un profilé de montage de la cloison ou au module (tranche, faces principales...), par exemple ils sont positionnés rapportés dans la cloison (dans l'espace interne défini par le profilé de montage) ou fixés par moyen amovible notamment de type vis dans la cloison (dans l'espace interne défini par le profilé de montage).

De préférence la base avec le ou les supports PCB et les diodes est démontable de la cloison par exemple elle n'est pas fixée de manière permanente (ou intégré) à un profilé de montage de la cloison par exemple rapportée ou fixée par moyen amovible notamment de type vis ni fixée au module.

De préférence également, la paroi latérale saillante (rapportée à la base de manière amovible éventuellement ou prolongeant la base d'un seul tenant), est démontable de la cloison par exemple n'est pas fixée de manière permanente (ou intégrée) à un profilé de montage de la cloison ni fixé de manière permanente au module.

De préférence également, un capot capotant les diodes (rapportée à la base de manière amovible éventuellement ou prolongeant la base d'un seul tenant), est démontable de la cloison par exemple n'est pas fixé de manière permanente (ou intégrée) à un profilé de montage de la cloison ou ni fixé de manière permanente au module.

Selon une caractéristique, la pièce notamment la première paroi latérale constitue une entretoise entre les diodes et la tranche du module, de préférence une entretoise longitudinale sur la majorité voire toute longueur du côté du module.

Avantageusement, lorsque le système d'éclairage est agencé au niveau du côté horizontal inférieur du module en position montée de la cloison, la pièce notamment première paroi forme au moins une butée d'appui et de support de la tranche du module notamment s'étendant dans la ou des zones hors diodes voire hors support(s) PCB, de préférence une (seule) butée longitudinale sur la majorité voire toute longueur du côté horizontal inférieur.

La ou les parois latérales peuvent suffire pour former une ou des butées d'appui cela peut dépendre de la largeur de support(s) PCB et du poids du module. On peut préférer compléter l'appui par une surface fermée « centrale » opposée à la base notamment parallèle à la tranche (plane) du module.

De préférence la largeur d'appui du module (par une butée ou plusieurs butées) sur la surface pleine d'appui de la pièce, s'étend sur la majorité voire sur (au moins) 2/3 de la largeur de la tranche dudit module, de préférence sur la totalité de la largeur, lorsque le système d'éclairage est agencé au niveau du côté horizontal inférieur du module en position montée de la cloison.

Dans le cas d'un vitrage monolithique, la largeur d'appui peut s'étendre sur la majorité voire sur 2/ 3 de la largeur de la feuille de verre.

Dans le cas d'un vitrage feuilleté, la largeur d'appui peut s'étendre sur la majorité voire sur 2/ 3 d'une des feuilles de verre ou sur la largeur de l'ensemble.

La largeur d'appui peut être la largeur cumulée de l'extrémité de la première paroi latérale saillante et d'une deuxième paroi latérale saillante, parois de part et d'autre des diodes (par exemple centrées sur le module monolithique ou feuilleté) et éventuellement cumulée aussi avec la surface fermée (trouée au droit des diodes) opposée à la base reliant ces parois latérales.

De préférence, la cloison comprend une deuxième paroi latérale aux diodes en regard de la tranche du module et disposée en saillie de la face émettrice des diodes, la deuxième paroi écartée de la première paroi s'étendant longitudinalement à la base, les première et deuxième parois étant de préférence rapportées voire liées à la base, et en ce que les diodes et de préférence leur(s) support(s) PCB sont agencés entre les première et deuxième parois.

De manière préférée, la cloison, notamment la pièce, comporte entre la tranche du module et les diodes, un capot (en regard de la tranche) capotant les diodes et le ou les supports PCB et apte à laisser passer la lumière des diodes vers la tranche du module, en s'étendant éventuellement (longitudinalement ou sur l'ensemble de la longueur de) la base, le capot comportant la première paroi latérale et une éventuelle deuxième paroi latérale saillante écartée de la première paroi, et de préférence le capot est creux avec au moins une section transversale en U retourné ou en Ω. Le capot forme la surface pleine de butée voire de support et est percé au droit des diodes lorsqu'il n'est pas transparent au droit des diodes.

Ou encore, la cloison, notamment la pièce, comprend une deuxième paroi saillante latérale aux diodes écartée de la première paroi et s'étendant longitudinalement à la base et reliée à la première paroi pour former une surface pleine opposée à la base, la surface pleine dite trouée étant pourvue d'orifice(s) traversant(s), de préférence de forme circulaire ou oblongue, qui sont au droit des diodes pour laisser passer la lumière émise par les diodes, ou la surface pleine étant apte à laisser passer la lumière émise par les diodes (transparente par exemple), l'espace procuré entre les parois logeant éventuellement les diodes et le ou les supports PCB.

La pièce comporte par exemple au moins une première paroi latérale aux diodes qui peut être rapportée sur la base voire aussi sur le support PCB et une éventuelle deuxième paroi latérale qui est rapportée sur la base voire aussi sur le support PCB, la première paroi latérale saillante (disposée en saillie de la face émettrice des diodes) est prolongée latéralement pour former une surface pleine, ou retour, opposée à la base retour fixé à la base voire au support PCB par des moyens de fixation de préférence amovibles, notamment de type vis.

La pièce comporte par exemple au moins une première paroi latérale aux diodes qui est rapportée sur la base voire aussi sur le support PCB et la base intègre la première paroi latérale saillante (disposée en saillie de la face émettrice des diodes), formant ainsi une pièce d'un seul tenant notamment en L.

La pièce ou le profilé d'accueil comporte une première paroi latérale aux diodes et saillante (disposée en saillie de la face émettrice des diodes) et une seconde paroi saillante (disposée en saillie de la face émettrice des diodes), les diodes étant entre les première et seconde parois, les parois étant sur la base du profilé, la seconde paroi étant ouverte latéralement. Cette seconde paroi peut faire partie du capot cité ci-dessus. La seconde paroi est ouverte selon au moins une ouverture longitudinale et selon une partie de sa hauteur, en particulier la partie basse de sa hauteur s'étendant depuis la base, de manière à rendre accessible le support PCB, pour en faciliter son retrait de la base du profilé et donc de la cloison. Il peut y avoir autant d'ouvertures que de supports PCB sur la base ou même une seule ouverture.

Le système d'éclairage est agencé par exemple sur deux côtés opposés de la cloison, de préférence au niveau des côtés horizontaux supérieur et inférieur du ou des modules en position montée de la cloison.

La ou les feuilles de verre sont à base d'un verre ayant une forte transmission lumineuse, d'au moins 85%, lorsque la mesure est effectuée sous illuminant D65 sur une feuille de verre à faces parallèles de 4 mm d'épaisseur.

Le verre des modules peut être trempé. Par ailleurs, les modules pourront présenter toutes sortes de propriétés usuelles pour les cloisons, telles que des propriétés acoustiques.

Avantageusement, la pièce comporte au moins une première paroi latérale aux diodes qui forme des moyens de redirection vers la tranche du module d'une fraction de la lumière latérale émise par les diodes en direction du module, de préférence par réflexion spéculaire, la première paroi latérale étant évasée en direction de la tranche du module ou perpendiculaire à la tranche.

Selon une autre caractéristique, la base comporte des moyens de dissipation de la chaleur, en particulier en un matériau métallique, qui est de préférence le matériau constitutif de la base, ou en ce qu'une pièce intermédiaire entre la base et le support PCB comporte des moyens de dissipation de la chaleur, en particulier à base d'un matériau métallique, qui est de préférence le matériau constitutif de la pièce, notamment de section en L incluant la paroi saillante du profilé.

La pièce d'écartement ou le profilé d'accueil lorsque celui-ci constitue la pièce d'écartement, est fait ou non de plusieurs parties rendues solidaires (de préférence deux pièces maximum), du même matériau constitutif ou non, notamment les matériaux de fabrication sont de la matière plastique ou composite, ou du téflon ou un matériau métallique. De préférence le profilé d'accueil ou la pièce d'écartement sont métalliques et même d'un seul tenant.

De préférence, la base du profilé est une plaque plane (supportant le poids du module si nécessaire), parallèle à la tranche du module, et au moins la première paroi latérale du profilé, dans un plan parallèle à la base, est une plaque plane (plastique ou métallique), notamment trouée au droit des diodes, parallèle à la tranche.

Les diodes sont agencées sur plusieurs supports PCB notamment montés préalablement sur la base, notamment avec la surface pleine en regard de la base entre les PCB.

De préférence, la largeur de la base dans un plan parallèle à la base est inférieure ou égale à la largeur de la tranche du module. Ainsi, le profilé présente des dimensions adaptées à sa fonction tout en présentant un volume minimisé pour son intégration à la cloison.

La pièce d'écartement n'est de préférence nullement associée aux faces principales du vitrage, que ce soit par n'importe quel type de fixation (serrage latéral, colle, etc...)

La pièce d'écartement n'est de préférence pas fixée à la tranche de la feuille de verre.

La pièce d'écartement peut être d'un seul tenant avec la base du profilé, ou bien elle est de préférence fixée à la base du profilé.

Le profilé d'accueil lorsqu'il forme la pièce d'écartement n'est nullement associé aux faces principales du vitrage, que ce soit par n'importe quel type de fixation (serrage latéral, colle, etc...).
Le profilé d'accueil lorsqu'il forme la pièce d'écartement n'est de préférence pas fixé à la tranche de la feuille de verre.

La pièce, notamment la première paroi latérale, est rapportée voire fixée à un profilé de montage de la cloison.

De préférence dans un montage des diodes en position haute de la cloison, la base est rapportée dans un profilé de montage de la cloison ou la base fait partie du profilé de montage de la cloison, notamment par l'âme ou un épaulement de l'âme du profilé de montage.

La hauteur des diodes est inférieure à 10 mm voire à 5 mm et la distance entre les diodes et la tranche du module est inférieure à 10 mm voire à 5 mm, les diodes comportant des puces semi-conductrices éventuellement recouvertes avec des moyens d'étanchéité à l'eau.

La cloison comprend une seule rangée de diodes le long de la tranche du module répartie longitudinalement en un ou plusieurs groupes de diodes sur support(s) PCB, ou dans le cas d'un module avec deux feuilles de verre espacées par une lame de gaz formant double vitrage, éventuellement deux rangées de diodes chacune en regard de la tranche de chaque feuille de verre.

En outre, la cloison comporte un profilé de montage dit inférieur ayant un espace intérieur adapté au logement des diodes sur support(s) PCB et de la pièce, notamment adapté au logement de la première paroi latérale saillante (voire de la base et de la deuxième paroi saillante les PCB étant agencés longitudinalement audit profilé de montage). Et de préférence, la base est posée voire fixée sur une ou plusieurs cales posées sur le fond (ou l'âme) du profilé de montage, en regard de la tranche du module.

Par ailleurs, la cloison comporte un profilé de montage dit profilé de montage supérieur en position montée de la cloison, le profilé de montage supérieur ayant un espace intérieur adapté au logement des diodes sur support(s) PCB et de la première paroi latérale saillante (voire de la base, de la deuxième paroi saillante) agencé longitudinalement audit profilé de montage, l'âme du profilé de montage, parallèle à la tranche du module, étant de préférence trouée, notamment pour fixer ledit profilé de montage supérieur par vissage.

Le profilé de montage (inférieur ou supérieur) comporte de préférence un épaulement présentant une gorge longitudinale, l'épaulement servant de surface d'appui à la base qui est de préférence fixée par un ensemble vis-écrou coopérant avec la gorge de l'épaulement.

La cloison éclairante de l'invention est destinée à tout type d'utilisation en extérieur et/ou intérieur, dans un bâtiment ou dans un véhicule (notamment de transport...) dans un espace public, telle qu'une séparation entre pièces, compartiment, une séparation à l'intérieur d'une même pièce, une porte, une vitrine, un comptoir, un dispositif de décoration d'intérieur, un garde-corps, un produit d'ameublement, un luminaire sur pied en particulier à forme parallélépipédique, etc...
L'utilisation d'une telle cloison est de fournir une paroi transparente et éclairante qui assure la séparation d'un espace ; la cloison permet de constituer une séparation physique éclairante délimitant de part et d'autre des zones d'occupation de l'espace. Il s'agit donc d'une application totalement éloignée d'un module éclairant pour écran de visualisation ou panneau éclairant de signalétique, ces dernières applications étant en outre généralement accrochées à un mur.

Selon l'invention, la cloison est transparente, surtout hors moyens d'extraction de la lumière(ou éventuellement la feuille de verre est dotée d'un revêtement semi réfléchissant, type miroir espion par exemple tel le produit commercialisé sous le nom Mirastar de la société Demanderesse).On préfère en outre voir l'éclairage des deux côtés du module.

Le profilé ou la pièce d'écartement peut de préférence s'intégrer dans un profilé de montage de la cloison sans être visible après montage. De préférence, le profilé ou la pièce d'écartement en regard de la tranche du module, ne possède aucun retour en direction des faces principales du module. Le profilé ou la pièce ne s'étend ainsi nullement au niveau des faces du module notamment afin de ne pas cacher même partiellement les faces du module.

Il est à noter que le profilé de montage n'est pas forcément fixé au sol mais pourrait être fixé sur une autre surface d'accueil.

La cloison peut comporter au moins un profilé de montage, en particulier fait de plusieurs pièces, comprenant une partie en U, de préférence doté d'une aile amovible, et de préférence comprenant des moyens d'étanchéité amovibles apposés entre le module et le profilé de montage, notamment fixés par clipsage.

Par ailleurs la cloison n'est pas forcément fixe, elle peut être mobile telle qu'une porte coulissante ou pivotante.

Enfin, l'invention propose un procédé de montage de la cloison à un sol ou sur une autre surface d'accueil inférieure caractérisé en ce que :
- Si besoin selon la destination de la cloison, on pose voire on fixe le profilé de montage inférieur au sol (de préférence par vis au travers de l'âme du profilé)
- Si l'étape ci-dessus a été réalisée, on pose éventuellement (si le sol n'est pas parfaitement plan) une ou des cales dans le profilé de montage (contre l'âme ou contre un épaulement interne au profilé en saillie et parallèle à l'âme)
- Quelle que soit la destination d'installation de la cloison, on installe dans le profilé de montage les diodes sur le ou les supports PCB et la pièce, notamment la première paroi saillante latérale, de préférence la première paroi étant associée à la base du profilé d'accueil avec les supports PCB par prémontage, de préférence on insère la base avec support PCB et diodes dans le profilé de montage,
- on pose le ou les modules sur la pièce notamment la première paroi saillante, de préférence sur plusieurs parois saillantes latérales de part et d'autre des diodes,
- on replace éventuellement une partie latérale amovible (ou mobile) du profilé de montage.

D'autres étapes sont notamment additionnelles :
- on pose des moyens d'étanchéité,
- on replace éventuellement une partie latérale mobile du profilé de montage.

Le procédé de montage de la cloison (telle que décrite précédemment) à un plafond ou contre une autre surface d'accueil supérieure comporte les étapes suivantes :
- on fixe le profilé de montage au plafond ou autre surface d'accueil (de préférence par vis via son âme trouée),
- on installe dans le profilé de montage les diodes sur le ou les supports PCB et la pièce notamment la paroi saillante de préférence prémontée, de préférence plusieurs parois saillantes latérales,
- on fixe le ou les modules en verre,
- on pose des moyens d'étanchéité,
- on replace éventuellement une partie latérale mobile du profilé de montage.

Pour le procédé de montage d'une cloison à un plafond ou un sol, on capote les diodes voire le support PCB par la surface pleine trouée, de préférence associée à la première paroi. La surface pleine s'étend dans une zone hors diodes et/ou hors support PCB.

La présente invention est maintenant décrite à l'aide d'exemples uniquement illustratifs et nullement limitatifs de la portée de l'invention, et à partir des illustrations ci-jointes, dans lesquelles :
- La figure 1 illustre schématiquement une vue de face d'une cloison éclairante en verre selon l'invention ;
- La figure 2 est une vue schématique partielle en coupe du côté inférieur de la cloison en position montée ;
- La figure 3 est une vue schématique partielle en coupe dans le plan vertical des diodes et du côté supérieur de la cloison en position montée ;
- La figure 4 correspond à une variante de la figure 3 selon une coupe dans un plan vertical entre les diodes, les diodes ne s'étendant pas selon toute la longueur du profilé telles qu'illustrée sur la variante de la figure 7 ;
- La figure 5 est une variante du profilé de montage inférieur de la cloison ;
- Les figures 6a à 6e sont des vues du profilé d'accueil des diodes avec une base et un capot, respectivement, en perspective de côté, en éclaté, de dessus, et en coupe dans un plan vertical d'une part selon une diode et d'autre part selon une fixation ;
- La figure 7 est une variante de la figure 6c ;
- La figure 8 est une vue de dessus et en coupe avec le module associé, de la figure 7 au droit des diodes ;
- La figure 9 est une variante en vue en coupe du profilé d'accueil selon la figure 8,
- Les figures 10 à 12 illustrent encore d'autres variantes de profilé d'accueil au droit des diodes, hors des zones, de préférence à surface pleine, du profilé d'accueil;
- La figure 13 illustre une vue en coupe d'une autre variante de d'intégration d'un profilé d'accueil dans un profilé supérieur de montage de la cloison.

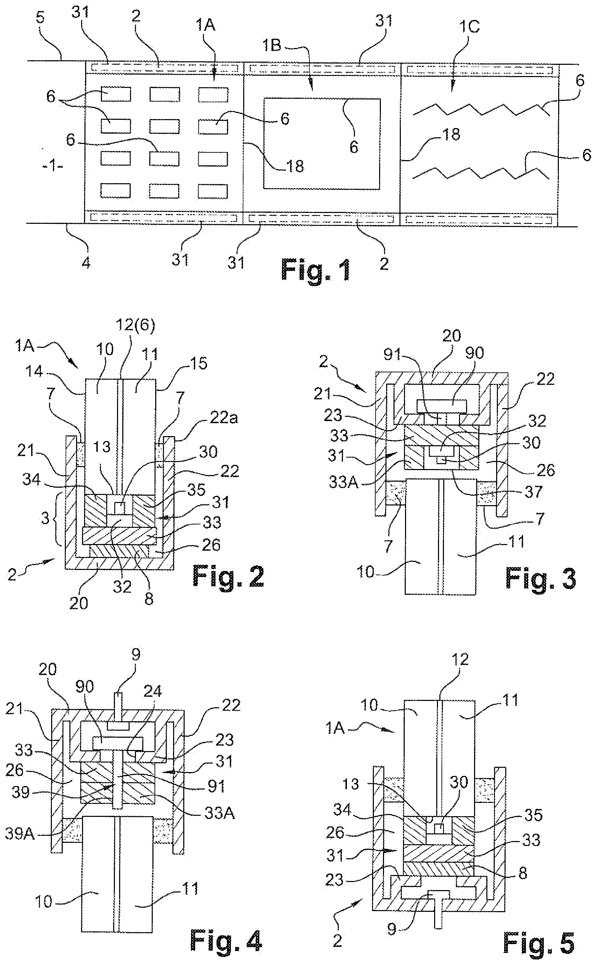

La cloison éclairante en verre 1 de l'invention telle qu'illustrée sur la figure 1 est apte à éclairer et est destinée par exemple à séparer des pièces adjacentes d'une construction ou former un élément de séparation ou de design disposé de manière isolée dans une pièce.

La cloison est montée verticale entre le sol 4 et le plafond 5 d'une pièce, en présentant une hauteur adaptée. Elle comporte au moins un module verrier 1A, éventuellement plusieurs modules 1A, 1B et 1C accolés selon un plan vertical dans une direction horizontale pour fournir la largeur idoine de la cloison.

La cloison comporte pour son montage des profilés de montage 2 inférieurs et supérieurs qui permettent de la fixer respectivement entre le sol et le plafond, tel qu'il sera illustré plus loin.

La cloison 1 est éclairante car comprenant, tel que visible sur les figures 2 et 3, un système d'éclairage 3 à base de diodes électroluminescentes 30 comprenant des profilés d'accueil 31 des diodes, les profilés d'accueil 31 étant agencés dans les profilés de montage 2 de manière cachée pour un observateur regardant la cloison montée (pointillés sur la figure 1) .

De préférence, en regard de la figure 1, le système d'éclairage 3 est disposé uniquement dans les profilés de montage 2 inférieurs et supérieurs horizontaux de la cloison, et non contre les bords verticaux afin de ne pas modifier l'aspect esthétique de la cloison au niveau des jonctions d'aboutement 18 entre modules.

Chaque module verrier, tel que celui 1A représenté aux figures 2 et 3, comporte deux feuilles de verres 10 et 11 feuilletées et assemblés entre elles par une feuille intermédiaire 12 en matière plastique.

Les feuilles de verre sont de préférence faites d'un verre ayant une forte transmission lumineuse, d'au moins 85%, lorsque la mesure est effectuée sous illuminant D65 sur une feuille de verre à faces parallèles de 4 mm d'épaisseur. De préférence, il s'agira d'un verre dit extra-clair, tel que le verre DIAMANT® commercialisé par la société SAINT-GOBAIN GLASS.

En variante, le module ne pourrait comprendre qu'une seule feuille de verre.

Dans une autre variante encore, le module pourrait comprendre deux feuilles de verre espacées par une lame de gaz, tel que de l'air, pour constituer un double-vitrage.

Les feuilles de verre pour un module feuilleté auront par exemple une épaisseur de 5, 6 ou 8 mm.

La feuille de verre pour un module monolithique sera de préférence trempée et aura de préférence une épaisseur de 10 ou 12 mm par exemple.

La cloison 1 fournit un éclairage procuré par au moins un module voire chacun des modules verriers.

De préférence, l'éclairage étant à base de diodes, la cloison comprend des moyens de diffusion 6 de la lumière associés à l'une des faces du verre pour un module monolithique (une seule feuille de verre), ou lorsque le module comprend au moins deux feuilles de verre (module feuilleté ou isolant de type double-vitrage), associés à l'une des faces internes (tournées vers l'intérieur du module) de l'une des feuilles de verre.

Les moyens de diffusion 6 sont de préférence sérigraphiés sur le verre et sont par exemple de l'émail. Ils s'étendent sur le verre selon un agencement et des motifs choisis. Ils ne recouvrent pas forcément la totalité de la surface du verre du module et peuvent ainsi délimiter des zones dites sombres fonctionnelles. Les zones sombres sont par exemple disposées de manière centrale ou périphérique au module. Elles consistent par exemple en des zones transparentes (clair de vitre) ou opaques, ou encore en des miroirs.

Sur la figure 1, ont été illustrés différents motifs des moyens de diffusion 6 sur chacun des modules, à la géométrie non limitative.

Tel qu'illustré sur les figures 2 et 3, le module 1A est éclairé par le système d'éclairage 3 en regard de la tranche 13 du module.

La lumière issue des diodes 30 qui sont situées en regard de la tranche 13 du module, par exemple en regard du centre de la tranche, se propage dans l'épaisseur de verre (voire de la feuille intermédiaire) dans une direction transversale aux plans formées par les faces principales 14 et 15 du module pour être redirigée grâce aux moyens de diffusion 6 vers l'extérieur du module.

Pour un module monolithique, les diodes sont agencées en regard de la tranche de l'unique feuille de verre. Pour un module avec deux feuilles de verre espacées par une lame d'air, les diodes sont de préférence disposées en regard de chacune des tranches des feuilles de verre.

Comme exprimé plus haut, les diodes sont disposées en regard des côtés horizontaux supérieur et inférieur du module.

En regard des figures 2 et 3, les profilés de montage 2 intègrent le système d'éclairage 3, plus spécifiquement les diodes 30 et des profilés d'accueil 31 logeant les diodes.

Afin de loger les profilés d'accueil 31, chacun des profilés de montage est de préférence un profilé à section en U doté d'une âme 20 et de deux ailes 21 et 22 parallèles et en regard connectées orthogonalement à l'âme 20.

Chacun des profilés de montage est de préférence fixé respectivement au sol et au plafond par vissage, les vis traversant l'âme 20.

Les portions surfaciques d'extrémité 16 et 17 du U de chaque profilé de montage viennent enserrer les faces principales respectives 14 et 15 du module.

Le profilé de montage présente une section de type en U d'un seul tenant ou en double U.

En variante, le profilé de montage peut être en plusieurs pièces par exemple, une partie du U, de préférence au niveau d'une aile, peut être amovible pour faciliter l'introduction des profilés d'accueil 31 et du module verrier. La figure 3 illustre ce détail de configuration, l'aile 22 du profilé 2 étant rapportée par exemple par clipsage.

Les profilés de montage 2 sont de préférence métalliques, en aluminium ou en inox.

Des moyens d'étanchéité 7 amovibles sont prévus en étant apposés contre le module et les extrémités libres 21a et 22a des ailes respectives 21 et 22 des profilés de montage. Ces moyens d'étanchéité sont par exemple fixés par clipsage.

Le profilé de montage 2 est destiné à être solidaire de la surface de fixation par des moyens de fixation 9 visibles sur les figures 3 et 4, tels que des vis qui traversent l'âme 20 et sont destinées à coopérer avec ladite surface de fixation. On préfèrera ne pas utiliser de vis auto-taraudeuses ; des orifices préalables seront prévus dans l'âme.

Les vis seront réparties selon la longueur du profilé de montage et plusieurs profilés d'accueil 31 seront prévus en étant disposés selon la longueur du profilé de montage et entre les vis de fixation si celles-ci ont des têtes en saillie.

En variante, les vis peuvent présenter des têtes plates qui sont noyées dans des lamages de l'âme 20 des profilés, afin de ne pas faire saillie.

Un profilé d'accueil 31 peut présenter une longueur équivalente à un module verrier ou à plusieurs modules verriers

Pour le profilé de montage inférieur (figure 2), afin de rattraper des défauts de planéité du sol, la cloison est agencée de niveau grâce à une ou des cales 8. La cale est disposée à l'intérieur du profilé de montage contre l'âme 20, le module 1A associé au système d'éclairage 3 étant destiné à reposer sur la ou les cales.

Les cales pourront être agencées à l'intérieur du U selon l'axe longitudinal du profilé de montage et réparties entre les moyens de fixation du profilé de montage.

En variante et telle qu'illustrée sur la figure 5, le profilé de montage 2 comprend à l'intérieur du U, contre l'âme 20 un épaulement longitudinal 23 sur lesquels repose une ou des cales 8. L'épaulement 23 forme avec l'âme 20 une cavité pour autoriser la mise en place des moyens de fixation 9.

Selon l'invention, le système d'éclairage 3 comprend les diodes 30 et un profilé d'accueil 31 pour le support des diodes. Le système d'éclairage 3 est couplé optiquement à la tranche 13 d'un module verrier. Aussi, les profilés de montage 2 présentent un volume intérieur 26 délimité par l'âme 20 et les ailes 21 et 22 qui est suffisant et adapté à la réception du profilé d'accueil 31 avec les diodes.

Le profilé d'accueil 31 peut présenter diverses configurations, telles que vues plus loin, en particulier lorsqu'il est utilisé soit dans un profilé de montage inférieur soit dans un profilé de montage supérieur.

Les diodes 30 sont disposées de manière connue sur un ou plusieurs dispositifs de support et d'alimentation électrique 32, qui sont typiquement des cartes de circuit imprimé (PCB pour « Printed Circuit Board » en anglais). Un vernis isolant électrique est prévu sur les connexions des diodes.

Les diodes (comme leur support PCB) ne sont pas noyées dans de la résine d'étanchéification évitant une épaisseur trop imposante de celles-ci et leur support. Avantageusement, les diodes comportent une puce semiconductrice combinée à une résine optique (luminophore) et éventuellement une couche étanche, en particulier déposée par pistolet, qui couvre les diodes et la surface du support.

La largeur du dispositif de support PCB 32 est par exemple inférieure ou égale à la largeur de la tranche du module voire d'une feuille de verre.

A titre d'exemple, les éléments présentent les dimensions suivantes :
- Largeur du PCB : 10 mm ou 5 mm,
- Epaisseur de PCB : 2 mm
- Hauteur des diodes : 2 mm
- Largeur de la base : 12 à 15 mm pour un PCB de 10 mm de large,
- hauteur en saillie du profilé par rapport au sommet de la diode : 2 mm
- hauteur séparant le sommet de la diode et la tranche du verre : environ 8 mm
- taille des diodes : 3,5 mm par 3,5 mm.

Les dispositifs de support et d'alimentation ou PCB 32 sont montés sur chacun des profilés d'accueil 31 et sont reliés électriquement à une connexion électrique centralisée non illustrée.

Le montage des dispositifs PCB avec les diodes au profilé d'accueil 31 peut se faire en usine, les profilés 31 étant livrés pour le montage de la cloison en intégrant déjà le ou les PCB avec les diodes. L'insertion du ou PCB avec les diodes peut également se faire lors du montage de la cloison, en rapportant les diodes via leurs dispositifs de support 32 dans les profilés 31.

L'agencement des dispositifs de support sera vu plus loin.
Plusieurs dispositifs 32 sont agencés de manière adjacente entre eux le long du profilé d'accueil 31.

Plus précisément, le profilé d'accueil 31 présente un corps global longitudinal avec une base et au moins une paroi latérale.

La base 33 s'étend de préférence sur la totalité du bord du module verrier notamment s'il s'agit du bord inférieur. La paroi latérale 34 s'étend également de préférence sur la totalité du bord du module verrier notamment s'il s'agit du bord inférieur.

La base 33 est de forme allongée et parallélépipédique. Ses deux faces principales opposées sont planes, l'une accueillant le(s) dispositif(s) de support 32 des diodes et l'autre reposant sur l'âme 20 du profilé de montage, via éventuellement une cale 8 ou l'épaulement 23.

La paroi latérale 34 s'étend orthogonalement à la base 31 en direction du module verrier. Elle présente une hauteur (dimension orthogonale à l'horizontal) supérieure à la des diodes 30, de façon à faire saillie au-delà de la surface d'extrémité distale éclairante des diodes.

Le profilé 31 est de préférence pourvu de deux parois latérales 34 et 35 parallèles et écartées entre lesquelles sont disposées les diodes et de préférence leur(s) support(s) sans que ces dernières ne dépassent des surfaces d'extrémité distales des parois à l'opposé de la base.

Ainsi, le profilé peut présenter une forme d'ensemble générale en L (non illustré) avec donc une seule paroi saillante ou en U, en étant ouvert respectivement sur son côté ou sur sa surface opposée à la base.

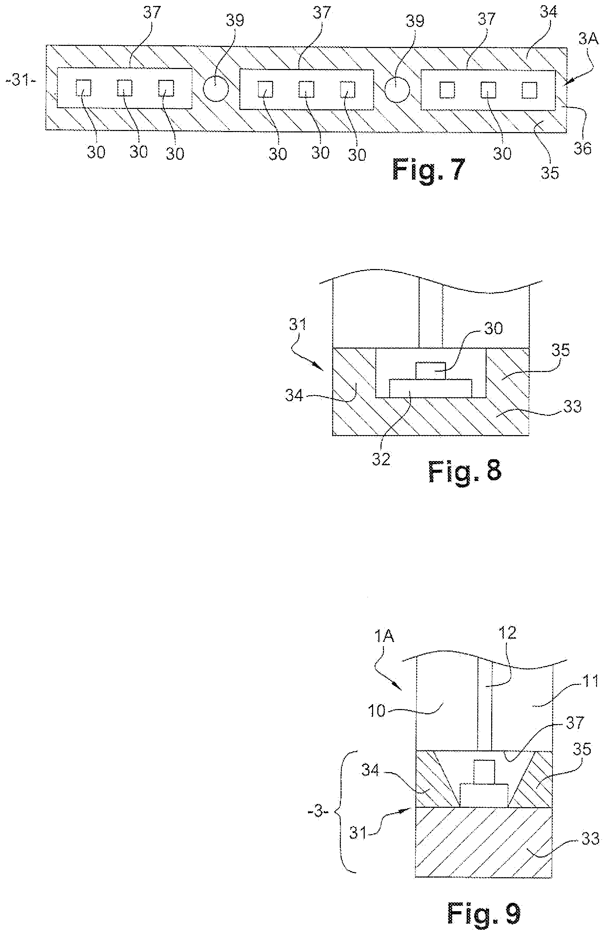

En particulier, lorsque le profilé comporte deux parois latérales 34 et 35, celles-ci sont formées de deux plaques écartées et posées perpendiculairement à la base 33 en étant réunies entre elles dans une zone en dehors des diodes et du PCB. Tel qu'illustré sur la figure 4, les parois 34 et 35 sont raccordées entre elles dans les zones qui ne comportent pas les diodes avec une section fermée rectangulaire. Ainsi, lorsque les diodes ne s'étendent pas sur toute la longueur du profilé mais qu'elles sont par exemple réparties par groupes séparés (figure 7), des rainures ont été pratiquées dans les parois pleines seulement au droit des PCB.

Toutefois on peut prévoir un creux dans la base ou dans la surface de raccordement pour loger le ou les PCB dans les zones hors diodes.

Le profilé d'accueil 31 peut être monobloc ou fait de plusieurs parties, la base constituant au moins une partie à elle seule.

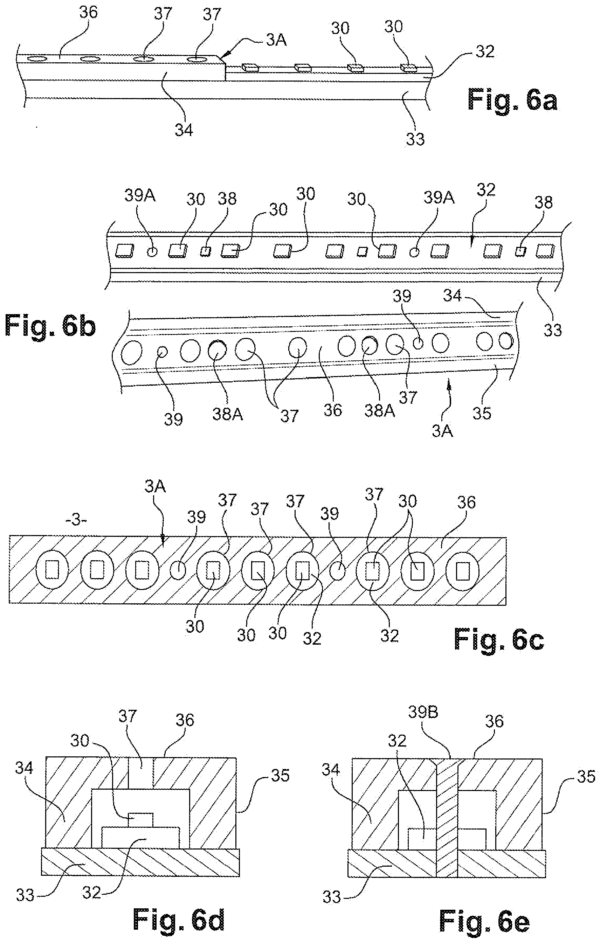

Dans un mode de réalisation préférentiel de l'invention (figures 2 à 5 selon une intégration dans les profilés de montage inférieur et supérieur), le profilé 31, en regard des figures 6a et 6b, comprend la base 33 et un capot longitudinal 33A creux de section en U retourné ou en Ω dont les ailes écartées constituent les parois respectives 34 et 35.

Le capot 33A est rapporté contre la base 33 après pose voire fixation du ou des PCB 32 des diodes sur ladite base 33. La figure 6a illustre en partie le capotage de la base 33 ainsi que du ou des PCB avec les diodes.

Le capot 33A est creux pour fournir de l'espace au logement des diodes 30 et à leurs résistances associées 38, le PCB 32 reposant sur la base 33 à distance de la face fermée 36 du capot. Le capot peut être en variante en contact avec les PCB.

Le capot creux 33A présente sa cavité en regard de la base 33, tandis qu'il est destiné à présenter son côté fermé opposé 36 en regard du module verrier. Toutefois, il présente dans l'épaisseur de son côté fermé 36, des orifices traversants 37 qui sont destinés à être en regard des diodes, permettant ainsi à la lumière des diodes de s'échapper du profilé 31 (figure 6b, 6c et 6d) et de rediriger la lumière latérale vers la tranche.

En outre, pour loger les résistantes 38 dans le capot et sous le côté fermé 36, des trous borgnes 38A sont prévus, tels que visibles sur la figure 6b pour laquelle le capot est vu de dessous.

Le capot 33A est fixé à la base 33 de préférence par vis 39B au travers d'alésages 39 et 39A respectivement agencés dans l'épaisseur du côté fermé 36 et dans l'épaisseur du support PCB et de la base 33 (figures 6b et 6e).

Le profilé 31 forme ainsi avec sa base 33 et son capot 33A un boitier de protection emprisonnant les supports PCB et les diodes dont la lumière est extraite grâce aux orifices 37 (figure 6d).

La base et son capot troué sont parallèles à la tranche du module afin de l'éclairer, la tranche du module étant plane et de préférence non biseautée.

Les parois latérales du capot forment les parois latérales saillantes 34 et 35 du profilé 31, la surface d'extrémité distale de ces parois 34 et 35 étant formée par une partie de la face fermée 36 du capot parallèle à la tranche du module verrier.

Pour le côté inférieur du module notamment, la partie fermée 36 du capot dotée des orifices 37 peut être en contact direct avec la tranche du module, tel qu'illustré sur les figures 2 et 5.

Les orifices 37 du capot peuvent être adaptés à la grosseur de chaque diode, selon par exemple une forme circulaire dans laquelle chaque diode est centrée et inscrite. Ils peuvent être également de forme oblongue en regard d'un groupe de diodes, tels qu'illustrés sur la figure 7

Le profilé d'accueil 31 peut être fait tel que vu ci-dessus de plusieurs parties rendues solidaires, du même matériau constitutif ou non. Les matériaux de fabrication sont par exemple de la matière plastique ou composite, ou du téflon pour la ou les parois latérales formant éventuellement capot.

Avantageusement, le profilé 31 intègre des moyens de dissipation de la chaleur, en particulier à base d'un matériau métallique notamment en inox, en aluminium

Les moyens de dissipation de la chaleur sont au moins solidaires des dispositifs de support 32 des diodes. Cela permet de dissiper la chaleur émise par les diodes au niveau de leur connexion aux dispositifs de support 32. De préférence la base porteuse du ou des supports PCB (eux-mêmes métalliques ou non) forment ces moyens de dissipation de la chaleur.

Le profilé dans son ensemble pourrait être métallique et former en tant que tel les moyens de dissipation de la chaleur.

Encore dans un autre mode de réalisation du profilé (non montré) de préférence pour la partie supérieure, le profilé 31 est monobloc (comportant base et parois saillantes) en un matériau unique métallique de section en U, les diodes et leur PCB étant logés à l'intérieur, un orifice oblong 37 à la manière d'une rainure (ou creux) étant agencée de préférence sur toute la longueur du profilé, les diodes étant alignées et centrées par rapport à cette rainure.
Outre, la protection aux diodes fournies par les parois 34 et 35, celles-ci constituent des butées pour le module verrier. Ces butées réalisent avantageusement une entretoise entre les diodes et le module verrier afin que celui-ci n'écrase pas par son poids les diodes qui sont en regard de sa tranche 13.

En effet, selon l'invention, le module verrier 1A s'appuie par sa tranche 13 inférieure sur le profilé 31 du système d'éclairage, le profilé reposant quant à lui sur l'âme du profilé de montage via éventuellement la cale 8.

Les parois latérales 34 et 35 du profilé portent tout (dans la ou les zones hors diodes) ou partie des tranches des feuilles de verre 10 et 11, les diodes 30 étant protégées du poids du module. Le poids du module imposé aux parois latérales est ensuite transférer à la base du profilé et à l'âme de du profilé de montage inférieur.

La figure 9 est une variante de profilé 31 en deux pièces par exemple destiné à être agencé dans un profilé de montage inférieur. Les parois latérales 34 et 35 présentent leur pan intérieur qui est coupé et évasé en direction de la tranche. Dans les zones hors diodes, zones qui ne sont pas au droit des diodes et PCB, les parois 34 et 35 se rejoignent de préférence comme décrit précédemment en surface pleine 36.

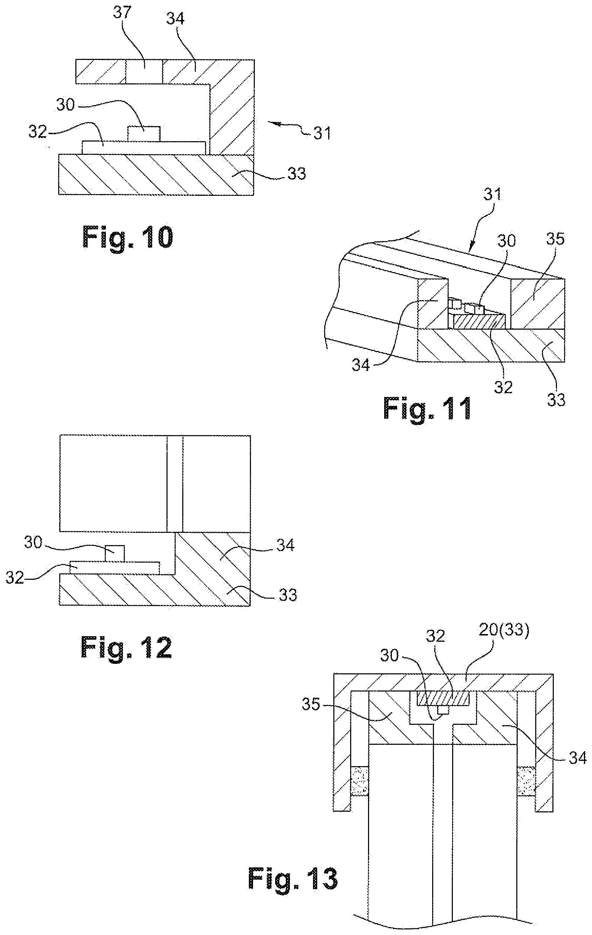

La figure 10 représente une autre variante de profilé en deux pièces, la première pièce correspondant à la première paroi 34 ayant une forme en L, une aile étant associée orthogonalement à la seconde pièce métallique plane formant la base (aile rapportée voire fixée sur cette base) tandis que l'autre aile forme un retour parallèle à la base et doté d'un orifice 37 en regard de la diode 30 et par exemple fixant la première pièce à la base par un vissage dans une zone hors diode (voire hors PCB). Dans les zones hors diodes, zones qui ne sont pas au droit des diodes et PCB, la paroi 34 formede préférence une surface pleine 36 pour soutenir le poids du substrat en position inférieure.

Les figures 11 à 13 représentent encore d'autres variantes de profilés.

Sur la figure 11 qui est une vue partielle en perspective uniquement au niveau des zones de diodes de la figure 7, le profilé présente avec sa base métallique 33 et ses deux parois latérales 34 et 35 (plastique ou métal) une forme en U à section ouverte sur le dessus en regard des diodes tandis que les supports de PCB sont disposés dans le fond du U. Dans les zones hors diodes (de préférence aussi hors PCB), les parois 34 et 35 de préférence se rejoignent pour former la surface pleine de butée du module et même de support du module en position inférieure. La surface d'appui s'étend sur la largeur du module.

En variante des figures 7 et 11 pour lesquelles, les orifices de la surface pleine sont sous forme de rectangles regroupant plusieurs diodes, les orifices pourraient être unitaires au droit des diodes. En vue de dessus, la surface pleine correspondrait aux barreaux d'une échelle, les espaces vides entre les barreaux formant les orifices de passage de la lumière au droit des diodes.

Sur la figure 12, le profilé est d'un seul tenant (base et paroi saillante en une pièce métallique) avec une section en L intégrant une seule paroi latérale 34 en regard d'une première feuille de verre les diodes étant disposées en regard une deuxième feuille de verre. Dans les zones de diodes, le profilé est de préférence pourvu d'échancrures ou encoches pour dégager la surface au droit des diodes, tandis que dans les zones hors diodes (de préférence aussi hors PCB), la paroi 34 est pleine et constitue la surface pleine de butée du module et même de support du module en position inférieure.

Concernant le profilé 31 logé dans le profilé de montage 2 supérieur (figure 3 et 4), celui-ci n'ayant pas à supporter le poids du vitrage, les surfaces d'extrémité des parois latérales 34 et 35 n'ont pas à être nécessairement accolées à la tranche 13 du module.

Dans le mode de réalisation des figures 3 et 4, le profilé de montage 2 comporte au niveau de son âme et à l'intérieur de l'espace 26, l'épaulement 23 qui présente une gorge longitudinale 24. La cavité formée entre l'épaulement 23 et l'âme 20 permet de loger des moyens de fixation du type écrou plat 90 et vis 91 pour fixer le profilé d'accueil 31 au profilé de montage, l'écrou étant inséré au travers de la gorge 24 parallèlement à celle-ci puis tourné à 90° pour assurer la fixation en reposant contre l'épaulement perpendiculairement à la gorge. La fixation du profilé par vis est réalisée par les mêmes alésages 39 et 39A de fixation du capot 33A à la base 33.

Dans une autre variante d'installation de diodes sur PCB de préférence dans le profilé de montage supérieur (variante montrée en figure 13), l'âme du profilé de montage forme la base porteuse des PCB avec les diodes et les deux parois latérales saillantes 34 et 35 sont rapportées sur l'âme 20 du profilé de montage et de préférence directement rendues solidaires de l'âme 20 du profilé de montage, par exemple par collage.

Les deux parois saillantes sont de préférence réunies, au moins pour le profilé de la partie inférieure, pour former une surface fermée à l'opposé de l'âme, surface trouée au droit des diodes, par exemple comme déjà montrée en figure 6d.

Le montage d'une cloison de l'invention est réalisé de la manière suivante en regard de la cloison des figures 1 et 2.

Les profilés de montage 2 inférieur et supérieur sont fixés respectivement au sol et au plafond, leur ouverture étant en regard l'une vers l'autre.

Des cales 8 sont éventuellement disposées sur le fond de l'âme 20 du profilé de montage inférieur.

Le profilé d'accueil 31 destiné à supporter le module est introduit dans le profilé de montage inférieur et disposé selon sa base contre la cale 8. Un maintien provisoire du profilé peut être effectué pour le positionner correctement dans l'espace 26 du profilé de montage en vue d'être centré et parallèle aux ailes 21 et 22 du profilé de montage. Ce maintien est par exemple réalisé par du ruban adhésif double-face.

Le profilé d'accueil 31 destiné à être fixé en regard du côté horizontal supérieur du module, est fixé dans le profilé de montage 2 supérieur.

Le module verrier est ensuite positionné face aux profilés de montage et maintenu incliné en introduisant son côté supérieur doté du profilé supérieur dans le profilé de montage supérieur lorsque le profilé de montage 2 supérieur ne présente pas de partie latérale 22 amovible.

Le profilé de montage supérieur présente dans son espace intérieur 26 un dégagement entre l'âme 20 et le profilé supérieur 31 qui est adapté pour lever suffisamment le module afin de le positionner à la verticale et le redescendre de façon à obtenir l'introduction de son côté horizontal inférieur dans le profilé de montage inférieur. Les parois saillantes 34 et 35 du profilé supérieur protègent les diodes lors du montage du module.

Enfin, en redescendant verticalement le module, celui-ci est mis en butée contre les parois latérales 34 et 35 et la surface pleine 36 du profilé d'accueil 31 du profilé de montage inférieur, protégeant les diodes. Le module est en place.

Des moyens d'étanchéité 7 sont disposés dans les interstices séparant le module des extrémités libres des ailes 21 et 22 des profilés de montage 2.

Par conséquent, de manière préférée selon l'invention, pour la partie inférieure la paroi latérale 34 (pièce d'écartement ou profilé en L) ou les parois latérales 34 et 35 du profilé (ou de la pièce d'écartement) avec leur zone fermée 36 portent tout (dans les zones hors diodes) ou partie des tranches des feuilles de verre 10 et 11, les diodes 30 étant protégées du poids du module. Le poids du module imposé à la zone fermée 36 est ensuite transféré à la base du profilé et à l'âme du profilé de montage inférieur.

Dans tous les modes de réalisations précités la largeur de la surface pleine est (au moins) égale à la largeur de la tranche du module dans des zones hors diodes au moins pour la partie inférieure.

## Revendications

1. Cloison en verre éclairante, comportant d'une part au moins un module verrier (1A, 1B, 1C) présentant deux faces principales (14, 15) et une tranche (13), le module comprenant au moins une feuille de verre (10, 11), et d'autre part un système d'éclairage (3)
- le système d'éclairage (3) comprend des diodes électroluminescentes (30) dont la face émettrice de lumière est disposée en regard de la tranche (13) d'au moins un côté du module, le module formant guide de la lumière émise par les diodes et le module comprenant des moyens d'extraction de la lumière (6) ainsi guidée, pour un éclairage via au moins l'une des faces principales,
- les diodes (30) sont agencées sur au moins un dispositif de support et d'alimentation électrique (32) dit support PCB,
- la cloison comporte au moins un profilé d'accueil (31) des diodes qui est pourvu d'une base longitudinale (33), en regard de la tranche du module et porteuse du support PCB, et
- le profilé d'accueil (31) des diodes comporte une pièce (34,35,36) apte à maintenir un écartement entre la face émettrice des diodes et la tranche du module, la pièce formant au moins une butée d'appui (36) de la tranche (13) du module
- la cloison étant transparente hors moyens d'extraction de la lumière
**caractérisée en ce que**
le système d'éclairage (3) est agencé au niveau du côté horizontal inférieur du module en position montée de la cloison
et ladite pièce comprend en regard de la tranche du module une surface pleine (36), formant la butée d'appui de la tranche du module et de support de la tranche, surface opposée à la base (33) dans des zones hors diodes, la surface pleine s'étendant longitudinalement dans la zone des diodes en étant trouée (37) au droit des diodes.

2. Cloison selon la revendication 1, **caractérisée en ce que** la surface pleine (36), est opposée à la base (33) dans des zones hors diodes et hors support(s) PCB.

3. Cloison selon la revendication 2, **caractérisée en ce que** le module s'appuie sur la surface pleine d'appui (36) sur au moins les 2/3 de la largeur de sa tranche ou la totalité de la largeur de sa tranche lorsque le système d'éclairage (3) est agencé au niveau du côté horizontal inférieur du module en position montée de la cloison..

4. Cloison selon la revendication 2 ou 3, **caractérisée en ce que** la surface pleine (36) est trouée au droit des diodes et **en ce que** la surface pleine (36) est formée par au moins une paroi (34) en L qui est en saillie de la base (33) et s'étend dans des zones en dehors des diodes, ou bien est formée par deux parois (34, 35) en saillie qui sont réunies entre elles dans les zones en dehors des diodes selon une section fermée rectangulaire.

5. Cloison selon l'une des revendications précédentes, **caractérisée en ce que** la pièce comporte au moins une première paroi latérale aux diodes (34) reliée à la base du profilé d'accueil ou deux parois latérales aux diodes (34, 35), reliées à la base du profilé d'accueil, la première paroi latérale étant au moins en partie en regard de la tranche du module et étant disposée en saillie de la face émettrice des diodes ou les deux parois latérales, de préférence au moins en partie en regard de la tranche du module, sont disposées en saillie de la face émettrice des diodes.

6. Cloison selon l'une quelconque des revendications précédentes, **caractérisée en ce que** la pièce, notamment la première paroi (34, 35), constitue une entretoise entre les diodes et la tranche du module et **en ce que** les diodes et de préférence leur(s) support(s) PCB sont agencés entre des première et deuxième parois latérales aux diodes lorsque la pièce comprend deux parois.

7. Cloison selon l'une quelconque des revendications précédentes, **caractérisée en ce que** la la pièce, comporte, entre la tranche du module et les diodes, un capot capotant les diodes et le ou les supports PCB et apte à laisser passer la lumière des diodes vers la tranche du module, et notamment formant une surface pleine (36), le capot s'étendant éventuellement longitudinalement sur la base, le capot comportant la première paroi latérale aux diodes et une éventuelle deuxième paroi latérale aux diodes et saillante écartée de la première paroi, et de préférence le capot est creux avec au moins une section transversale en U retourné ou en Ω.

8. Cloison selon l'une quelconque des revendications précédentes, **caractérisée en ce que** la pièce comporte au moins une première paroi latérale (34, 35) aux diodes qui est rapportée sur la base voire aussi sur le support PCB et une éventuelle deuxième paroi latérale aux diodes qui est rapportée sur la base voire aussi sur le support PCB, la première paroi latérale saillante est prolongée latéralement pour former une surface pleine (36), ou retour, opposée à la base (33), retour fixé à la base (33) voire au support PCB par des moyens de fixation de préférence amovibles, notamment de type vis.

9. Cloison selon l'une quelconque des revendications précédentes, **caractérisée en ce que** la pièce comporte au moins une première paroi latérale (34, 35) aux diodes qui est rapportée sur la base voire aussi sur le support PCB et la base intègre la première paroi latérale saillante, formant ainsi une pièce d'un seul tenant notamment en L.

10. Cloison selon l'une quelconque des revendications précédentes, **caractérisée en ce que** la pièce comporte au moins une première paroi latérale aux diodes qui forme des moyens de redirection vers la tranche d'une fraction de la lumière latérale émise par les diodes en direction du module, de préférence par réflexion spéculaire, la première paroi latérale étant évasée en direction de la tranche du module ou perpendiculaire à la tranche.

11. Cloison selon l'une quelconque des revendications précédentes, **caractérisée en ce que** la base (33) comporte des moyens de dissipation de la chaleur, en particulier en un matériau métallique, qui est de préférence le matériau constitutif de la base.

12. Cloison selon l'une quelconque des revendications précédentes, **caractérisée en ce que** la pièce d'écartement ou le profilé d'accueil (31) lorsque celui-ci constitue la pièce d'écartement, est fait ou non de plusieurs parties rendues solidaires, du même matériau constitutif ou non, notamment les matériaux de fabrication sont de la matière plastique ou composite, du téflon, ou un matériau métallique.

13. Cloison selon l'une quelconque des revendications précédentes, **caractérisée en ce que** les diodes (30) sont agencées sur plusieurs supports PCB (32) notamment montés préalablement sur la base (33), notamment avec la surface pleine en regard de la base entre les PCB.

14. Cloison selon l'une quelconque des revendications précédentes, **caractérisée en ce que** la pièce, notamment la première paroi, est rapportée voire fixée à un profilé de montage de la cloison.

15. Cloison selon l'une quelconque des revendications précédentes, **caractérisée en ce que** la base (33) est rapportée dans un profilé de montage de la cloison ou la base (33) fait partie du profilé de montage de la cloison, notamment par l'âme du profilé de montage ou d'un épaulement de l'âme du profilé de montage.

16. Cloison selon l'une quelconque des revendications précédentes, **caractérisée en ce qu'**elle comprend une seule rangée de diodes le long de la tranche du module répartie longitudinalement en un ou plusieurs groupes de diodes sur support(s) PCB, ou dans le cas d'un module avec deux feuilles de verre espacées par une lame de gaz formant double vitrage, éventuellement deux rangées de diodes chacune en regard de la tranche de chaque feuille de verre.

17. Cloison selon l'une quelconque des revendications précédentes, **caractérisée en ce qu'**elle comporte un profilé de montage (2) dit inférieur ayant un espace intérieur (26) adapté au logement des diodes sur support(s) PCB et de la pièce, notamment la première paroi latérale saillante, et de préférence la base est posée voire fixée sur une ou plusieurs cales (8) posés sur le fond du profilé de montage, en regard de la tranche du module.

18. Cloison selon l'une quelconque des revendications précédentes, **caractérisée en ce qu'**elle comporte au moins un profilé de montage, en particulier fait de plusieurs pièces, comprenant une partie en U, de préférence le profilé étant doté d'une aile mobile ou amovible, et de préférence comprenant des moyens d'étanchéité amovibles apposés entre le module et le profilé de montage, notamment fixés par clipsage..

19. Cloison selon l'une quelconque des revendications précédentes, **caractérisée en ce qu'**elle comporte un profilé de montage dit profilé de montage (2) supérieur en position montée de la cloison, la profilé de montage supérieur ayant un espace intérieur (26) adapté au logement des diodes sur support(s) PCB et de la première paroi latérale saillante, l'âme du profilé de montage, parallèle à la tranche du module, étant de préférence trouée pour fixer ledit profilé de montage supérieur par vissage.

20. Cloison selon l'une quelconque des revendications précédentes, **caractérisée en ce que** le profilé de montage comporte un épaulement présentant une gorge longitudinale, l'épaulement servant de surface d'appui à la base qui est de préférence fixée par un ensemble vis-écrou coopérant avec la gorge de l'épaulement.

21. Cloison selon l'une quelconque des revendications précédentes, **caractérisée en ce que** la pièce ou le profilé d'accueil comporte une première paroi latérale aux diodes et saillante et une seconde paroi latérales aux diodes et saillante, les diodes étant entre les première et seconde parois, les parois étant sur la base du profilé, la seconde paroi étant ouverte latéralement.

22. Cloison selon l'une quelconque des revendications précédentes, **caractérisée en ce qu'**elle est utilisée en extérieur ou intérieur, dans un bâtiment ou dans un véhicule, dans un espace public, en tant que séparation entre pièces, compartiment, séparation à l'intérieur d'une même pièce, porte, vitrine, dispositif de décoration d'intérieur, garde-corps, produit d'ameublement, luminaire sur pied en particulier à forme parallélépipédique.

23. Procédé de montage d'une cloison à un sol ou sur une autre surface d'accueil inférieure selon l'une quelconque des revendications précédentes, **caractérisé en ce que**
- on installe dans un profilé de montage (20) les diodes sur le ou les supports PCB et la pièce, notamment la première paroi saillante latérale aux diodes, de préférence la première paroi étant associée à la base du profilé d'accueil avec les supports PCB par prémontage,
- on pose la base dans le profilé de montage,
- on pose le ou les modules sur la première paroi saillante, de préférence sur plusieurs parois saillantes latérales de part et d'autre des diodes
- on replace éventuellement une partie latérale mobile ou amovible du profilé de montage.

24. Procédé de montage d'une cloison à un plafond ou contre une autre surface d'accueil supérieure selon l'une quelconque des revendications 1 à 22, **caractérisé en ce que** l'on installe dans un profilé de montage (20) les diodes sur le ou les supports PCB et la pièce ou la paroi latérale saillante de préférence prémontée, de préférence plusieurs parois saillantes latérales.

25. Procédé de montage d'une cloison à un plafond ou un sol selon la revendication 23 ou 24, **caractérisé en ce qu'**on capote les diodes voire le support PCB par la surface pleine trouée, de préférence associée à la première paroi.

## Patentansprüche

1. Leuchtende Glastrennwand, beinhaltend einerseits mindestens ein Glasmodul (1A, 1B, 1C), das zwei Hauptflächen (14, 15) und eine Kante (13) aufweist, wobei das Modul mindestens eine Glasscheibe (10, 11) umfasst, und andererseits ein Beleuchtungssystem (3), wobei
- das Beleuchtungssystem (3) Leuchtdioden (30) umfasst, deren Licht emittierende Seite gegenüber der Kante (13) von mindestens einer Seite des Moduls angeordnet ist, wobei das Modul den Leiter des von den Dioden emittierten Lichts bildet und das Modul Auskopplungsmittel für das so geleitete Licht (6) umfasst, zur Beleuchtung über mindestens eine der Hauptflächen,
- die Dioden (30) auf mindestens einer Träger- und Stromversorgungsvorrichtung (32), PCB-Träger genannt, angeordnet sind,
- die Trennwand mindestens ein Profil (31) zur Aufnahme der Dioden umfasst, das mit einer Längsbasis (33) versehen ist, die gegenüber der Kante des Moduls liegt und den PCB-Träger trägt, und
das Profil (31) zur Aufnahme der Dioden ein Teil (34, 35, 36) umfasst, das geeignet ist, die emittierende Seite der Dioden und die Kante des Moduls beabstandet zu halten, wobei das Teil mindestens ein Abstützanschlag (36) der Kante (13) des Moduls bildet
- die Trennwand außerhalb der Lichtextraktionsmittel transparent ist
**dadurch gekennzeichnet, dass**
das Beleuchtungssystem (3) in der montierten Position der Trennwand an der waagerechten unteren Seite des Moduls angeordnet ist
und das Teil gegenüber der Kante des Moduls eine geschlossene Oberfläche (36) aufweist, die den Abstützanschlag der Kante des Moduls und einen Träger der Kante bildet, wobei die Oberfläche in Bereichen außerhalb von Dioden entgegengesetzt zur Basis (33) ist, wobei sich die geschlossene Oberfläche im Bereich der Dioden längs erstreckt und dabei an den Dioden gelocht (37) ist.

2. Trennwand nach Anspruch 1, **dadurch gekennzeichnet, dass** die geschlossene Oberfläche (36) entgegengesetzt zur Basis (33) in Bereichen außerhalb von Dioden und außerhalb des(der) PCB-Träger(s) ist.

3. Trennwand nach Anspruch 2, **dadurch gekennzeichnet, dass** sich das Modul auf der geschlossenen Stützoberfläche (36) über mindestens 2/3 der Breite seiner Kante oder die gesamte Breite seiner Kante abstützt, wenn das Beleuchtungssystem (3) in der montierten Position der Trennwand an der waagerechten unteren Seite des Moduls angeordnet ist.

4. Trennwand nach Anspruch 2 oder 3, **dadurch gekennzeichnet, dass** die geschlossene Oberfläche (36) an den Dioden gelocht ist und dass die geschlossene Oberfläche (36) durch mindestens eine L-förmige Wand (34) gebildet wird, die von der Basis (33) vorspringt und sich in Bereichen außerhalb der Dioden erstreckt, oder aber durch zwei vorspringende Wände (34, 35) gebildet wird, die untereinander in den Bereichen außerhalb der Dioden gemäß einem rechteckigen geschlossenen Querschnitt verbunden sind.

5. Trennwand nach einem der vorhergehenden Ansprüche, **dadurch gekennzeichnet, dass** das Teil mindestens eine Wand seitlich der Dioden (34) umfasst, die mit der Basis des Aufnahmeprofils verbunden ist, oder zwei Wände seitlich der Dioden (34, 35), die mit der Basis des Aufnahmeprofils verbunden sind, wobei die erste Seitenwand zumindest teilweise gegenüber der Kante des Moduls liegt und von der emittierenden Seite der Dioden vorspringend angeordnet ist oder die beiden Seitenwände, bevorzugt zumindest teilweise gegenüber der Kante des Moduls, von der emittierenden Seite der Dioden vorspringend angeordnet sind.

6. Trennwand nach einem der vorhergehenden Ansprüche, **dadurch gekennzeichnet, dass** das Teil, insbesondere die erste Wand (34, 35), ein Distanzstück zwischen den Dioden und der Kante des Moduls bildet und dass die Dioden und bevorzugt ihr(e) PCB-Träger zwischen ersten und zweiten Wänden seitlich der Dioden angeordnet sind, wenn das Teil zwei Wände umfasst.

7. Trennwand nach einem der vorhergehenden Ansprüche, **dadurch gekennzeichnet, dass** das Teil, das sich zwischen der Kante des Moduls und den Dioden befindet, eine Abdeckung umfasst, welche die Dioden und den oder die PCB-Träger abdeckt und geeignet ist, das Licht der Dioden zur Kante des Moduls hin durchzulassen, und insbesondere eine geschlossene Oberfläche (36) bildet, wobei sich die Abdeckung gegebenenfalls längs auf der Basis erstreckt, wobei die Abdeckung die erste Wand seitlich der Dioden und gegebenenfalls eine zweite Wand seitlich der Dioden und vorspringend umfasst, die von der ersten Wand beabstandet ist, und die Abdeckung bevorzugt hohl ist, mit mindestens einem Querschnitt in Form eines umgekehrten U oder eines Ω.

8. Trennwand nach einem der vorhergehenden Ansprüche, **dadurch gekennzeichnet, dass** das Teil mindestens eine erste Wand (34, 35) seitlich der Dioden umfasst, die auf die Basis oder sogar auch auf den PCB-Träger aufgesetzt ist, und gegebenenfalls eine zweite Wand seitlich zu den Dioden, die auf die Basis oder sogar auch auf den PCB-Träger aufgesetzt ist, wobei die erste vorspringende Seitenwand seitlich verlängert ist, um eine geschlossene Oberfläche (36), oder Umkehrung, entgegengesetzt zur Basis (33) zu bilden, wobei die Umkehrung an der Basis (33) oder sogar am PCB-Träger mit bevorzugt lösbaren Befestigungsmitteln, insbesondere vom Typ Schraube, befestigt ist.

9. Trennwand nach einem der vorhergehenden Ansprüche, **dadurch gekennzeichnet, dass** das Teil mindestens eine erste Wand (34, 35) seitlich der Dioden umfasst, die auf die Basis oder sogar auch auf den PCB-Träger aufgesetzt ist, und die Basis die erste vorspringende Seitenwand beinhaltet und so ein durchgehendes, insbesondere L-förmiges Teil bildet.

10. Trennwand nach einem der vorhergehenden Ansprüche, **dadurch gekennzeichnet, dass** das Teil mindestens eine erste Wand seitlich der Dioden umfasst, die Mittel zur Umlenkung eines Anteils des von den Dioden in Richtung des Moduls emittierten Lichts zur Kante hin bilden, bevorzugt durch Spiegelreflexion, wobei die erste Seitenwand in Richtung der Kante des Moduls oder senkrecht zur Kante aufgeweitet ist.

11. Trennwand nach einem der vorhergehenden Ansprüche, **dadurch gekennzeichnet, dass** die Basis (33) Mittel zur Abführung der Wärme umfasst, insbesondere aus einem metallischen Werkstoff, der bevorzugt der Werkstoff ist, aus dem die Basis besteht.

12. Trennwand nach einem der vorhergehenden Ansprüche, **dadurch gekennzeichnet, dass** das Beabstandungsteil oder das Aufnahmeprofil (31), wenn dieses das Beabstandungsteil bildet, aus mehreren fest miteinander verbundenen Teilen besteht oder nicht, die aus dem gleichen Werkstoff bestehen oder nicht, wobei die Fertigungswerkstoffe insbesondere Kunststoff oder ein Verbundstoff, Teflon oder ein metallischer Werkstoff sind.

13. Trennwand nach einem der vorhergehenden Ansprüche, **dadurch gekennzeichnet, dass** die Dioden (30) auf mehreren PCB-Trägern (32) angeordnet sind, die insbesondere zuvor auf der Basis (33) montiert werden, insbesondere mit der geschlossenen Oberfläche gegenüber der Basis zwischen den PCB.

14. Trennwand nach einem der vorhergehenden Ansprüche, **dadurch gekennzeichnet, dass** das Teil, insbesondere die erste Wand, an ein Montageprofil der Trennwand angesetzt oder sogar daran befestigt ist.

15. Trennwand nach einem der vorhergehenden Ansprüche, **dadurch gekennzeichnet, dass** die Basis (33) in einem Montageprofil der Trennwand angesetzt ist oder die Basis (33) Teil des Montageprofils der Trennwand ist, insbesondere durch den Steg des Montageprofils oder eine Schulter des Stegs des Montageprofils.

16. Trennwand nach einem der vorhergehenden Ansprüche, **dadurch gekennzeichnet, dass** sie eine einzige Reihe von Dioden entlang der Kante des Moduls umfasst, die längs in einer oder mehreren Diodengruppen auf PCB-Träger(n) verteilt sind, oder im Fall eines Moduls mit zwei Glasscheiben, die durch eine Gasfüllung beabstandet sind und eine Doppelverglasung bilden, gegebenenfalls zwei Reihen von Dioden, jede gegenüber der Kante einer jeder Glasscheibe.

17. Trennwand nach einem der vorhergehenden Ansprüche, **dadurch gekennzeichnet, dass** sie ein Montageprofil (2), ein so genanntes inneres Profil, umfasst, das einen Innenraum (26) aufweist, der zur Aufnahme der Dioden auf PCB-Träger(n) und des Teils, insbesondere der ersten vorspringenden Seitenwand, eingerichtet ist und die Basis bevorzugt auf eine oder mehrere Beilagen (8) gesetzt oder sogar daran befestigt ist, die auf den Boden des Montageprofils gegenüber der Kante des Moduls gesetzt sind.

18. Trennwand nach einem der vorhergehenden Ansprüche, **dadurch gekennzeichnet, dass** sie mindestens ein Montageprofil umfasst, das insbesondere aus mehreren Teilen besteht, umfassend einen U-förmigen Teil, wobei das Profil bevorzugt mit einem beweglichen oder lösbaren Schenkel versehen ist, und bevorzugt lösbare Dichtmittel umfasst, die zwischen dem Modul und dem Montageprofil angebracht sind, insbesondere durch Einklipsen befestigt sind.

19. Trennwand nach einem der vorhergehenden Ansprüche, **dadurch gekennzeichnet, dass** sie ein Montageprofil, in der montierten Position der Trennwand oberes Montageprofil (2) genannt, umfasst, wobei das obere Montageprofil einen Innenraum (26) aufweist, der zur Aufnahme der Dioden auf PCB-Träger(n) und der ersten vorspringenden Seitenwand geeignet ist, wobei der Steg des Montageprofils, parallel zur Kante des Moduls, bevorzugt gelocht ist, um das obere Montageprofil durch Anschrauben zu befestigen.

20. Trennwand nach einem der vorhergehenden Ansprüche, **dadurch gekennzeichnet, dass** das Montageprofil eine Schulter umfasst, die eine Längskehle aufweist, wobei die Schulter als Auflagefläche für die Basis dient, die bevorzugt mit einer Schraube-Mutter-Anordnung befestigt ist, die mit der Kehle der Schulter zusammenwirkt.

21. Trennwand nach einem der vorhergehenden Ansprüche, **dadurch gekennzeichnet, dass** das Teil oder das Aufnahmeprofil eine erste Wand seitlich der Dioden und vorspringend und eine zweite Wand seitlich der Dioden und vorspringend umfasst, wobei die Dioden zwischen der ersten und der zweiten Wand sind, wobei die Wände auf der Basis des Profils sind, wobei die zweite Wand seitlich offen ist.

22. Trennwand nach einem der vorhergehenden Ansprüche, **dadurch gekennzeichnet, dass** sie im Außen- oder Innenbereich, in einem Gebäude oder in einem Fahrzeug, in einem öffentlichen Raum, als Abtrennung zwischen Zimmern, Abteil, Abtrennung innerhalb desselben Zimmers, Tür, Schaufenster, Innendekorationseinrichtung, Geländer, Einrichtungsgegenstand, Stehleuchte, insbesondere mit parallelepipedischer Form, verwendet wird.

23. Verfahren zur Montage einer Trennwand auf einem Boden oder einer anderen unteren Aufnahmefläche nach einem der vorhergehenden Ansprüche, **dadurch gekennzeichnet, dass**
- in einem Montageprofil (20)
die Dioden auf dem oder den
PCB-Trägern und dem Teil angebracht werden, insbesondere die erste vorspringende Wand seitlich der Dioden, wobei die erste Wand bevorzugt durch Vormontage an der Basis des Aufnahmeprofils mit den PCB-Trägern verbunden wird,
- die Basis in das Montageprofil gesetzt wird,
- das oder die Module auf die erste vorspringende Wand gesetzt werden, bevorzugt auf mehrere vorspringende Seitenwände beidseits der Dioden
- gegebenenfalls ein beweglicher oder lösbarer seitlicher Teil des Montageprofils umgesetzt wird.

24. Verfahren zur Montage einer Trennwand an einer Decke oder gegen eine andere obere Aufnahmefläche nach einem der Ansprüche 1 bis 22, **dadurch gekennzeichnet, dass** in einem Montageprofil (20) die Dioden auf dem oder den PCB-Trägern und das Teil oder die bevorzugt vormontierte vorspringende Seitenwand, bevorzugt mehrere vorspringende Seitenwände, angebracht werden.

25. Verfahren zur Montage einer Trennwand an einer Decke oder einem Boden nach Anspruch 23 oder 24, **dadurch gekennzeichnet, dass** die Dioden oder sogar der PCB-Träger mit der gelochten geschlossenen Oberfläche, die bevorzugt mit der ersten Wand verbunden ist, abgedeckt werden bzw. wird.

## Claims

1. An illuminating glass partition, comprising, on the one hand, at least one glazing module (1A, 1B, 1C) having two main faces (14, 15) and an edge face (13), the module comprising at least one glass sheet (10, 11), and on the other hand, an illuminating system (3),
- the illuminating system (3) comprises light-emitting diodes (30) the light-emitting faces of which are placed facing the edge face (13) of at least one edge of the module, the module guiding the light emitted by the diodes and the module comprising means for extracting the light (6) thus guided, in order to provide illumination via at least one of the main faces;
- the diodes (30) are arranged on at least one carrier electrical-supply device (32) called a PCB carrier;
- the partition comprises at least one profile (31) for accommodating the diodes that is provided with a longitudinal base (33), facing the edge face of the module and bearing the PCB carrier; and
- said profile (31) for accommodating the diodes comprises a part (34, 35, 36) able to maintain a separation between the emitting face of the diodes and the edge face of the module, the part forming at least one stop bearing the edge face (13) of the module
- the partition being transparent, beyond the means for extracting light
**characterized in that**:
the illuminating system (3) is arranged on the upper horizontal edge of the module in the fitted position of the partition
the part comprises, facing the edge face of the module, a continuous area (36) forming said one stop bearing the edge face and supporting the edge face, the area opposite the base (33) in regions free of diodes, the continuous area extending longitudinally in the diode-containing region while being aperture (37) in line with the diodes.

2. The partition as claimed in claim 1, **characterized in that** the continuous area (36) is opposite the base (33) in regions free of diodes and free of PCB carrier(s).

3. The partition as claimed in claim 2, **characterized in that** the module bears against the continuous bearing area (36) over at least 2/3 of the width of its edge face or the entire width of its edge face when the illuminating system (3) is arranged on the lower horizontal edge of the module in the fitted position of the partition.

4. The partition as claimed in either of claims 2 and 3, **characterized in that** the continuous area (36) is apertured in line with the diodes and **in that** the continuous area (36) is formed by at least one L-shaped wall (34) that protrudes from the base (33) and extends into the regions beyond the diodes, or else is formed by two protruding walls (34, 35) that join together in the regions beyond the diodes to form a closed rectangular section.

5. The partition as claimed in one of the preceding claims, **characterized in that** the part comprises at least one first wall (34) lateral to the diodes, which wall is connected to the base of the accommodating profile, or two walls (34, 35) lateral to the diodes, which walls are connected to the base of the accommodating profile, the first lateral wall at least partially facing the edge face of the module and protruding beyond the emitting face of the diodes, or the two lateral walls, which preferably at least partially face the edge face of the module, protrude beyond the emitting face of the diodes.

6. The partition as claimed in any one of the preceding claims, **characterized in that** the part, especially the first wall (34, 35), forms a spacer between the diodes and the edge face of the module, and **in that** the diodes and preferably their PCB carrier(s) are arranged between the first and second walls lateral to the diodes when the part comprises two walls.

7. The partition as claimed in any one of the preceding claims, **characterized in that** the part comprises, between the edge face of the module and the diodes, a cap capping the diodes and the one or more PCB carriers and able to let light from the diodes pass toward the edge face of the module, and especially forming a continuous area (36), the cap possibly extending longitudinally over the base, the cap comprising the first wall lateral to the diodes and an optional second wall lateral to the diodes and protruding separate from the first wall, the cap preferably being recessed and having at least one upside-down-U-shaped or Ω-shaped cross section.

8. The partition as claimed in any one of the preceding claims, **characterized in that** the part comprises at least one first wall (34, 35) lateral to the diodes, which wall is attached to the base or even also to the PCB carrier, and an optional second wall lateral to the diodes, which wall is attached to the base or even also to the PCB carrier, the protruding first lateral wall is extended laterally to form a continuous area (36), or projection, opposite the base (33), which projection is fixed to the base (33) or even to the PCB carrier by fastening means that are preferably removable, these means especially being screws.

9. The partition as claimed in any one of the preceding claims, **characterized in that** the part comprises at least one first wall (34, 35) lateral to the diodes, which wall is attached to the base or even also to the PCB carrier, and the base incorporates the protruding first lateral wall, thus forming an integral, especially L-shaped, part.

10. The partition as claimed in any one of the preceding claims, **characterized in that** the part comprises at least one first wall lateral to the diodes, which wall forms means for redirecting, toward the edge face, a fraction of the lateral light emitted by the diodes in the direction of the module, preferably by specular reflection, the first lateral wall flaring in the direction of the edge face of the module or perpendicular to the edge face.

11. The partition as claimed in any one of the preceding claims, **characterized in that** the base (33) comprises means for dissipating heat, in particular means made of a metal, which metal is preferably the material from which the base is made.

12. The partition as claimed in any one of the preceding claims, **characterized in that** the separating part, or the accommodating profile (31) when the latter forms the separating part, is optionally made up of a number of parts securely fastened together, which parts are optionally made of the same material, the manufacturing materials especially being a plastic or composite, Teflon, or a metal.

13. The partition as claimed in any one of the preceding claims, **characterized in that** the diodes (30) are arranged over a plurality of PCB carriers (32) especially fitted beforehand on the base (33), especially with the continuous area facing the base between the PCBs.

14. The partition as claimed in any one of the preceding claims, **characterized in that** the part, especially the first wall, is attached or even fixed to a fitting profile of the partition.

15. The partition as claimed in any one of the preceding claims, **characterized in that** the base (33) is attached to the fitting profile of the partition, or the base (33) forms part of the fitting profile of the partition, especially via the web of the fitting profile or via a shoulder of the web of the fitting profile.

16. The partition as claimed in any one of the preceding claims, **characterized in that** it comprises a single row of diodes along the edge face of the module, distributed longitudinally in one or more groups of diodes on PCB carrier(s), or in the case of a module with two glass sheets separated by a gas-filled cavity forming a double glazing unit, optionally two rows of diodes each facing the edge face of each glass sheet.

17. The partition as claimed in any one of the preceding claims, **characterized in that** it comprises what is called a lower fitting profile (2) having an internal space (26) suitable for housing the diodes on PCB carrier(s) and the part, especially the protruding first lateral wall, and preferably the base is placed on or even fixed to one or more shims (8) placed on the bottom of the fitting profile, facing the edge face of the module.

18. The partition as claimed in any one of the preceding claims, **characterized in that** it comprises at least one fitting profile, which is in particular made of a number of parts, comprising a U-shaped portion, the profile preferably being equipped with a movable or removable flange, and preferably comprising removable sealing means inserted between the module and the fitting profile, and especially fixed in place by clip fastening.

19. The partition as claimed in any one of the preceding claims, **characterized in that** it comprises a fitting profile called the upper fitting profile (2) in the fitted position of the partition, the upper fitting profile containing an internal space (26) suitable for housing the diodes on PCB carrier(s) and the protruding first lateral wall, the web of the fitting profile, lying parallel to the edge face of the module, preferably being apertured in order to allow said upper fitting profile to be fixed in place by screw fastening.

20. The partition as claimed in any one of the preceding claims, **characterized in that** the fitting profile comprises a shoulder containing a longitudinal channel, the shoulder serving as an area for bearing the base, the base preferably being fixed in place by a screw/nut assembly that interacts with the channel in the shoulder.

21. The partition as claimed in any one of the preceding claims, **characterized in that** the part or the accommodating profile comprises a protruding first wall lateral to the diodes and a protruding second wall lateral to the diodes, the diodes being located between the first and second walls, the walls being located on the base of the profile, the second wall being open laterally.

22. The partition as claimed in any one of the preceding claims, **characterized in that** it is used either internally or externally, in a building or in a vehicle, in a public space, as a divider between rooms, compartments, a divider inside one and the same room, a door, window, an interior decoration device, balustrade, item of furniture, or floor lamp, in particular one having a parallelepipedal shape.

23. A method for fitting a partition according to any one of the preceding claims to a floor or another lower receiving surface, **characterized in that**:
- the diodes on the one or more PCB carriers and the part, especially the protruding first wall lateral to the diodes, are installed in the fitting profile, the first wall preferably being associated with the base of the accomodating profile with the PCB carriers by pre-fitting;
- the base is placed in the fitting profile;
- the one or more modules are placed on the protruding first wall, preferably on a plurality of protruding lateral walls located on either side of the diodes; and
- optionally a movable or removable lateral portion of the fitting profile is put back.

24. A method for fitting a partition according to any one of claims 1 to 22 to a ceiling or against another upper receiving surface, **characterized in that** the diodes on the one or more PCB carriers, and the part or the preferably pre-fitted protruding lateral wall, preferably a plurality of protruding lateral walls, are installed in the fitting profile.

25. The method for fitting a partition to a ceiling or a floor according to either of claims 23 and 24, **characterized in that** the diodes or even the PCB carrier are capped by the apertured continuous area that is preferably associated with the first wall.
